Europäisches Patentamt

European Patent Office

Office européen des brevets

(19)

(11) Veröffentlichungsnummer: **0 150 416**
**B1**

# EUROPÄISCHE PATENTSCHRIFT

(45) Veröffentlichungstag der Patentschrift: **29.08.90**

(21) Anmeldenummer: **84115634.2**

(22) Anmeldetag: **17.12.84**

(51) Int. Cl.⁵: **H 04 M 3/60**, H 04 M 3/42

(54) **Verfahren zum Betreiben eines Vermittlungsplatzes und/oder eines Endgerätes einer Fernmelde-, insbesondere Fernsprechvermittlungsanlage.**

(30) Priorität: **25.01.84 DE 3402455**

(43) Veröffentlichungstag der Anmeldung:
**07.08.85 Patentblatt 85/32**

(45) Bekanntmachung des Hinweises auf die Patenterteilung:
**29.08.90 Patentblatt 90/35**

(84) Benannte Vertragsstaaten:
**AT BE FR IT**

(56) Entgegenhaltungen:
**EP-A-0 075 652**
**DE-A-2 260 023**
**DE-A-2 741 768**

(73) Patentinhaber: **TELENORMA Telefonbau und Normalzeit GmbH**
**Mainzer Landstrasse 128-146**
**D-6000 Frankfurt am Main (DE)**

(72) Erfinder: **Müller, Walter, Dipl.-Ing.**
**Im Zuckergarten 30**
**D-6500 Mainz 42 (DE)**
Erfinder: **Kretz, Hans-Joachim**
**Mainzer Landstrasse 501**
**D-6000 Frankfurt/Main (DE)**

Courier Press, Leamington Spa, England.

**Beschreibung**

Die Erfindung betrifft ein Verfahren zum Betreiben eines Vermittlungsplatzes und/oder eines Teilnehmer-Endgeräts einer Fernmelde-, insbesondere Fernsprechvermittlungsanlage mit einem Speicher, wobei der Vermittlungsplatz bzw. das Teilnehmer-Endgerät mit einer Anzeigeeinrichtung versehen ist, welche u.a. zur Anzeige der Rufnummer eines Teilnehmeranschlusses dient, und die Anzeige von Texten in unterschiedlichen Sprachen möglich ist.

Die Anzeige eines Vermittlungsplatzes dient zum Kennzeichnen von Betriebszuständen einer Vermittlungsanlage und stellt ein Hilfsmittel für die Bedienungsperson des Vermittlungsplatzes bei der Abwicklung von Vermittlungsvorgängen dar. Neben anderen Informationen wird beispielsweise auf der Anzeigeeinrichtung die Rufnummer eines rufenden oder gerufenen Teilnehmeranschlusses angezeigt. Die Steuerung einer derartigen Anzeigeeinrichtung wird beispielsweise in der DE—PS 31 37 993 beschrieben.

Wird nun eine Fernsprechvermittlungsanlage von einem internationalen Publikum benutzt, beispielsweise in inem Hotel, so haben Personen, welche die Sprache des betreffenden Landes nicht beherrschen, Schwierigkeiten bei der Benutzung der Fernsprechvermittlungsanlage. Weisen die von diesen Personen benutzten Endgeräte eine Anzeigeeinrichtung auf, so kann der Anzeigetext derselben in einer Fremdsprache angezeigt werden. Aus der genannten Druckschrift ist bereits bekannt, Anzeigetexte gleicher Bedeutung in unterschiedlichen Sprachen in entsprechenden Speichern bereitzustellen, um diese dann der Anzeigeeinrichtung zuzuführen. Hierbei handelt es sich jedoch bei der Festlegung der Fremdsprache um einen einmaligen Vorgang, insbesondere dann, wenn die Vermittlungsanlage in einem anderen Land installiert und der Vermittlungsplatz jeweils von einer Person bedient wird, welche die Sprache des betreffenden Landes beherrscht.

Die Aufgabe der Erfindung besteht nun darin, ein Verfahren anzugeben, welches die Benutzung einer Fernsprech- oder Fernmeldevermittlungsanlage durch fremdsprachliche Benutzer erleichtert.

Diese Aufgabe wird dadurch gelöst, daß ein Sprachkennzeichen in den, den betreffenden Teilnehmeranschluß zugeordneten Speicherplatz des Speichers eingespeichet wird und daß das Sprachkennzeichen entweder zusammen mit der Rufnummer des Teilnehmeranschlusses an der Anzeigeeinrichtung des Vermittlungsplatzes angezeigt wird oder zur Auswahl des jeweiligen Anzeigetextes in der betreffenden Sprache in einem, sämtliche Betriebsvorgänge kennzeichnende Anzeigetexte in mehreren Sprachen enthaltenen Speicher dient, wobei die Anzeige des jeweiligen Anzeigetextes an der Anzeigeeinrichtung des Vermittlungsplatzes bzw. des Teilnehmer-Endgeräts erfolgt.

Durch die Zuordnung des Sprachkennzeichens zu einem Teilnehmeranschluß kann die Bedienungsperson des Vermittlungsplatzes auf die Fremdsprache des Anrufers hingewiesen werden, indem entweder dessen Rufnummer zusammen mit dem Sprachkennzeichen angezeigt wird oder durch Sprachkennzeichen die Anzeigetexte in der Fremdsprache des Anrufers angezeigt werden, um so die Bedienungsperson über die Art der Fremdsprache des Anrufers zu informieren. Weiterhin kann mit Hilfe des Sprachkennzeichens die Anzeige am Teilnehmer-Endgerät in der Fremdsprach des jeweiligen Benutzers erfolgen, dies ist besonders dann wertvoll, wenn die Anzeige im Rahmen der Bedienerführung erfolgt. Die Anwendung des Verfahrens ist in erster Linie für Hotels gedacht, wobei die Einspeicherung des Sprachkennzeichens des jeweiligen Hotelgastes im Anschluß an die Zimmervergabe über den Vermittlungsplatz erfolgt.

Eine vorteilhafte Weiterbildung der Erfindung besteht darin, daß mehrere Vermittlungsplätze an der Fernmeldevermittlungsanlage angeschlossen sind, von denen jeweils einer oder mehrere für die Abwicklung von Vermittlungsvorgängen für jeweils eine bestimmte Sprache vorgesehen sind, indem die Zuteilung der Anrufe in Abhängigkeit von dem jeweiligen Sprachkennzeichen des rufenden Teilnehmeranschlusses erfolgt.

Als zusätzliches Kriterium für die Anrufverteilung kann das Sprachkennzeichen herangezogen werden, indem Anrufe von Benutzern jeweils dem jeweiligen Vermittlungssplatz zugeteilt werden, dessen Bedienungsperson die Fremdsprache des Anrufers beherrscht.

Weitere Vorteile ergeben sich aus den Unteransprüchen.

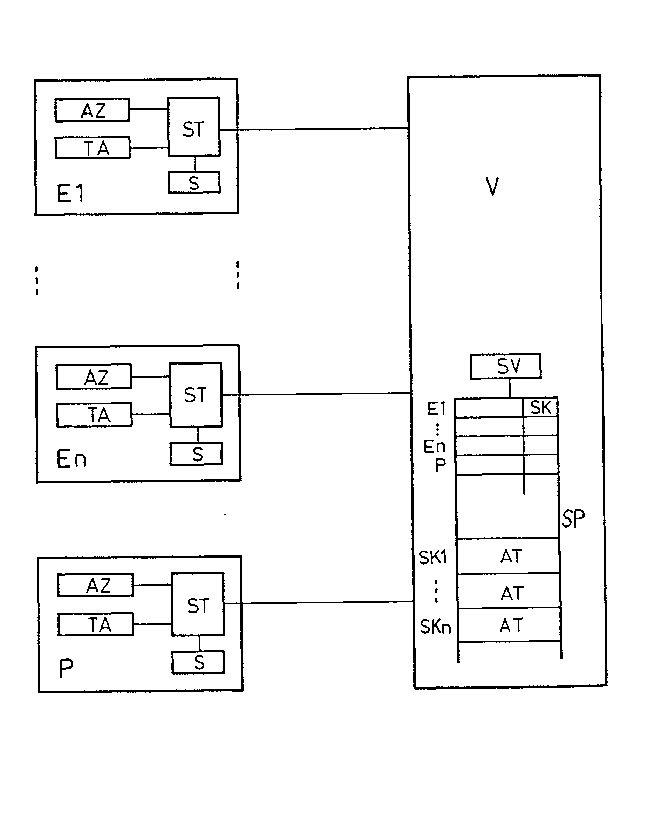

Die Erfindung wird anhand eines Ausführungsbeispiels näher erläutert, welches in der Zeichnung dargestellt ist.

An einer Fernmeldevermittlungsanlage V sind Endgeräte E1 bis En und Vermittlungsplätze P angeschlossen, von denen jedoch nur wenige gezeigt werden. Es wird darauf hingewiesen, daß in der Zeichnung nur diejenigen Einrichtungen dargestellt sind, welche zum Verständnis der Erfindung unbedingt notwendig sind. Bei der Fernmeldevermittlungsanlage V kann es sich beispielsweise um eine digitale Fernmeldevermittlungsanlage handeln, die Erfindung ist jedoch auch auf solche Anlagen mit analoger Durchschaltung der Verbindungswege anwendbar.

Die Endgeräte E und Vermittlungsplätze P weisen jeweils eine Anzeigeeinrichtung AZ und eine Eingabetastatur TA auf, welche mit einer Steuereinrichtung ST verbunden ist. Die Steuereinrichtungen ST sind mit einem eigenen Speicher S verbunden. Bei den Anzeigeeinrichtungen kann es sich beispielsweise um einen Bildschirm oder auch um eine Flüssigkristallanzeige handeln. In der Vermittlungsanlage V ist eine Steuereinrichtung SV vorgesehen, welche mit einem Speicher SP verbunden ist. Dieser Speicher weist verschiedene Speicherbereiche auf, so z.B. solche, die jeweils einem Endgerät oder Vermittlungsplatz fest zugeordnet sind und solche (SK1 bis SKm) für die Einspeicherung jeweils der gleichen, die einzelnen Betriebsvorgänge kennzeichnenden Anzeigetexte, wobei diese in unterschiedlichen Sprachen den einzelnen Speicherbereichen zugeordnet sind. Bei den mit E1 bis P bezeichneten Speicherbereichen kann es sich beispielsweise um diejenigen handeln, welche bei einer Vermittlungsanlage ohnehin vorhanden sind und sämtliche einen Teilnehmeranschluß betreffende Informationen enthalten (z.B. Teilnehmerrufnummer, Berechtigungen, uzw.).

Über die Tastatur TA am Vermittlungsplatz P erfolgt die Eingabe der Rufnummer eines bestimmten Teilnehmeranschlusses, an welchem ein Endgerät E angeschlossen ist zusammen mit dem jeweiligen Sprachkennzeichen. Beide Informationen werden der Steuereinrichtung SV übermittelt, welche die Einspeicherung des Sprachkennzeichens SK in dem betreffenden Teilnehmeranschlußzugeordneten Speicherbereich veranlaßt. Bei einem Verbindungsaufbau unter Beteiligung des Vermittlungsplatzes P wird das Sprachkennzeichen SK des betreffenden Teilnehmeranschlusses aus dem Speicher SP ausgelesen und verbindungsindividuell abgespeichert. Wird an einem Endgerät E ein Verbindungsaufbau veranlaßt, so gelangt in der Regel zunächst die Rufnummer des betreffenden Endgeräts E zum Vermittlungsplatz P, wo eine Anzeige derselben auf der Anzeigeeinrichtung AZ erfolgt. Dieser Anzeige wird das Sprachkennzeichen SK hinzugefügt. Neben der Darstellung des jeweiligen Sprachkennzeichens auf der Anzeigeeinrichtung AZ ist jedoch auch eine Anzeige eines einen Betriebszustand kennzeichnenden Anzeigetextes in der dem Sprachkennzeichen zugeordneten Sprache möglich. Zu diesem Zweck wird mit Hilfe des Sprachkennzeichens SK der Speicherbereich AT ausgewählt, wobei die Ansteuerung des betreffenden Anzeigetextes durch die Steuereinrichtung SV erfolgt. Dieser Anzeigetext wird dem Vermittlungsplatz P übermittelt und auf dessen Anzeigeeinrichtung AZ zur Anzeige gebracht.

Sind mehrere Vermittlungsplätze P vorhanden, wobei jeweils ein oder mehrere Vermittlungsplätze jeweils einer oder mehrerer Sprachen zugeordnet sind, so kann die Anrufverteilung in Abhängigkeit von dem Sprachkennzeichen SK erfolgen.

Die Eingabe der Sprachkennzeichen am Vermittlungsplatz P geschieht beispielsweise durch Betätigung einer einer bestimmten Sprache zugeordneten Taste, oder durch eine alpha-numerische Tastatur oder durch eine Wähltastatur oder Wählscheibe.

Das Sprachkennzeichen SK kann auch zur Steuerung der Anzeige bei einem Endgerät E verwendet werden, indem die Anzeige der Anzeigetext jeweils in der dem Sprachkennzeichen zugeordneten Sprache erfolgt. In diesem Fall wird aufgrund der Eingabe des Sprachkennzeichens am Vermittlungsplatz P der betreffende Speicherbereich AT angesteuert und dessen Inhalt in den Speicher S den betreffenden Endgerätes E übertragen, welches durch die Eingabe der Rufnummer am Vermittlungsplatz P entsprechend gekennzeichnet worden ist. Aufgrund von Informationen aus der Vermittlungsanlage V ist die Steuereinrichtung ST des Endgeräts E in der Lage, die entsprechenden Anzeigetexte aus dem Speicher S auszulesen und auf der Anzeigeeinrichtung AZ zur Anzeige zu bringen.

Durch Eingabe eines Sprachkennzeichens durch den Vermittlungsplatz P wird bei der Einspeicherung desselben ein evtl. bereits vorhandenes Sprachkennzeichen gelöscht.

## Patentansprüche

1. Verfahren zum Betreiben eines Vermittlungsplatzes und/oder eines Teilnehmer-Endgeräts in einer Fernmelde-, insbesondere Fernsprechvermittlungsanlage mit einem Speicher, wobei der Vermittlungsplatz bzw. das Teilnehmer-Endgerät mit einer Anzeigeeinrichtung versehen ist, welche u.a. zur Anzeige der Rufnummer eines Teilnehmeranschlusses dient, und die Anzeige von Texten in unterschiedlichen Sprachen möglich ist, dadurch gekennzeichnet, daß ein Sprachkennzeichen (SK) in dem, dem betreffenden Teilnehmeranschluß zugeordneten Speicherplatz des Speichers eingespeichert wird, und daß das Sprachkennzeichen entweder zusammen mit der Rufnummer des Teilnehmeranschlusses an der Anzeigeeinrichtung (AZ) des Vermittlungsplatzes (P) angezeigt wird oder zur Auswahl des jeweiligen Anzeigetextes in der betreffenden Sprache in einem, sämtliche Betriebsvorgänge kennzeichnende Anzeigetexte in mehreren Sprachen enthaltenden Speicher dient, wobei die Anzeige des jeweiligen Anzeigetextes an der Anzeigeeinrichtung (AZ) des Vermittlungsplates (P) bzw. des Teilnehmer-Endgeräts (E) erfolgt.

2. Verfahren nach Anspruch 1, dadurch gekennzeichnet, daß am Vermittlungsplatz (P) zusammen mit der Rufnummer eines Teilnehmeranschlusses das betreffende Sprachkennzeichen (SK) zur Einspeicherung in den Speicher eingegeben wird.

3. Verfahren nach Anspruch 1 oder 2, dadurch gekennzeichnet, daß am Vermittlungsplatz (P) für jedes Sprachkennzeichen (SK) eine individuelle Taste vorgesehen ist.

4. Verfahren nach Anspruch 1 oder 2, dadurch gekennzeichnet, daß die Eingabe des Sprachkennzeichens (SK) am Vermittlungsplatz (P) über eine alpha-numerische Tastatur erfolgt.

5. Verfahren nach Anspruch 1 oder 2, dadurch gekennzeichnet, daß die Eingabe des Sprachkennzeichens (SK) am Vermittlungsplatz (P) über die Wähltastatur bzw. Wählscheibe erfolgt.

6. Verfahren nach einem der Ansprüche 1 bis 5, dadurch gekennzeichnet, daß mehrere Vermittlungsplätze (P) an der Fernmeldevermittlungsanlage angeschlossen sind, von denen jeweils eine oder mehrere für die Abwicklung von Vermittlungsvorgängen für eine bestimmte Sprache vorgesehen sind, indem die Zuteilung der Anrufe in Abhängigkeit von dem jeweiligen Sprachkennzeichen (SK) des rufenden Teilnehmeranschlusses erfolgt.

**Revendications**

1. Procédé de mise en oeuvre d'une position d'opératrice et/ou d'un appareil terminal d'abonné d'un central de télécommunications, en particulier d'un central téléphonique, comportant une mémoire, la position d'opératrice ou le dispositif terminal d'abonné comportant un appareil d'affichage qui sert en particulier à l'affichage du numéro d'appel d'un raccordement d'abonné, et l'affichage de texte dans différentes langues est possible, caractérisé en ce qu'est mémorisé un signe distinctif de langue (SK) dans l'emplacement de la mémoire associé au raccordement d'abonné concerné, et en ce que le signe distinctif de langue, soit, est affiché en même temps que le numéro d'appel du raccordement d'abonné sur le dispositif d'affichage (AZ) de la position d'apératrice (P), soit, sort pour le choix du texte respectif d'affichage dans la langue concernée, dans une mémoire contenant dans plusieurs langues divers textes d'affichage significatifs des processus de fonctionnement, l'affichage du texte d'affichage correspondant se produisant sur le dispositif d'affichage (AZ) de la position d'opératrice (P) ou de l'appareil terminal d'abonné (E).

2. Procédé selon la revendication 1, caractérisé en ce que le signe distinctif de langue correspondant (SK) est introduit dans la mémoire pour mémorisation à la position d'opératrice (P) en même temps que le numéro d'appel d'un raccordement d'abonné.

3. Procédé selon la revendication 1 ou 2, caractérisé en ce qu'une touche individuelle est prévue pour chaque signe distinctif de lanque (SK) a la position d'opératrice (P).

4. Procédé selon la revendication 1 ou 2, caractérisé en ce que l'introduction du signe distinctif de langue (SK) est effectué a la position d'opératrice (P) a l'aide d'un clavier alphanumérique.

5. Procédé selon la revendication 1 ou 2, caractérisé en ce que l'introduction du signe distinctif de langue (SK) est effectué à la position d'opératrice a l'aide du clavier d'appel ou du cadran d'appel.

6. Procédé selon l'une des revendications 1 à 5, caractérisé en ce que plusieurs positions d'opératrice (P) sont raccordées a l'installation d'opératrice d'un central de télécommunications parmi lesquelles une ou plusieurs sont prévues pour la réalisation de processus de liaison pour une langue définie, l'attribution des appels s'effectuant en fonction du signe distinctif correspondant de langue (SK) du raccordement d'abonné qui appelle.

**Claims**

1. Operating method of an operator position and/or of a terminal apparatus of a telecommunication exchange, especially a telephone exchange with a memory, whereby the operator position respectively the terminal apparatus is provided with a display arrangement, which is used among other things for the display of the subscribers dial number, and the display of text information in the form of different languages is possible, characterized in, that a language indication (SK) is stored in the memory field of the memory assigned to the respective subscriber line and that the language indication is either displayed at the display arrangement (AZ) of the operator position (P) together with the dial number of the subscriber line or is used for the selection of the respective display text in the concerned language in a memory comprising display text information of several languages characterizing all operating procedures of the exchange, whereby the display of the respective text information is performed at the display arrangement of the operator position (P) respectively the terminal apparatus (E).

2. Operating method according to claim 1, characterized in, that the input of the concerning language indication (SK) is performed together with the dial number of the subscriber line at the operator position (P) for the storage in the memory.

3. Operating method according to claim 1 or 2, characterized in, that the operator position (P) is provided with an individual push button for each language indication (SK).

4. Operating method according to claim 1 or 2, characterized in, that the input of the language indication (SK) at the operator position (P) is performed by the use of an alpha-numeric key board.

5. Operating method according to claim 1 or 2, characterized in, that the input of the language indication (SK) at the operator position (P) is performed by the use of the dialing key board respectively the dial.

6. Operator method according to one of claims 1 to 5, characterized in, that several operator positions (P) are connected with the telecommunication exchange, of which one or several are used for the performance of call handling procedures for an appointed languages, while the distribution of the calls is performed in dependance of the respective language indication of the calling subscriber line.

EP 0 150 416 B1